# EUROPEAN PATENT APPLICATION

(11) **EP 4 175 382 A1**
(43) Date of publication of application: **03.05.2023**
(21) Application number: 20943428.1
(22) Date of filing: 30.06.2020
(51) Int. Cl.: H04W 72/04, H04W 92/04

(54) **WIRELESS COMMUNICATION NODE**

(71) Applicant: NTT DOCOMO, INC., Chiyoda-Ku Tokyo 100-6150 (JP)
(72) Inventor: KURITA Daisuke, Tokyo 100-6150 (JP); HARADA Hiroki, Tokyo 100-6150 (JP); SUN Weiqi, Beijing 100190 (CN); WANG Jing, Beijing 100190 (CN); HOU Xiaolin, Beijing 100190 (CN)
(74) Representative: Hoffmann Eitle
(86) International application number: PCT/JP2020/025701
(87) International publication number: WO 2022/003834

(57) **Abstract**

A radio communication node (100B) receives configuration information on a radio resource for at least a lower node from a parent node or a central unit.

## Description

### Technical Field

The present disclosure relates to dual connectivity in a radio communication node where radio access and radio backhaul are configured.

### Background Art

In the 3rd Generation Partnership Project (3GPP), specifications of 5th generation mobile communication systems (also called 5G, New Radio (NR) or Next Generation (NG)) are prepared, and furthermore, the next-generation specifications called Beyond 5G, 5G Evolution, or 6G are in progress.

For example, in a radio access network (RAN) of the NR, integrated access and backhaul (IAB) in which radio access to a terminal (user equipment (UE)) and radio backhaul between radio communication nodes such as a radio base station (gNB) are integrated is studied.

In the IAB, an IAB node includes a mobile termination (MT) that is a function to connect to a higher node such as parent node or an IAB donor central unit (CU) and a distributed unit (DU) that is a function to connect to a lower node such as a child node or UE.

In 3GPP Release 16, the radio access and the radio backhaul are assumed on half-duplex communication and time division multiplexing (TDM). In Release 17, a simultaneous operation (simultaneous Tx/Rx) of the MT and the DU is being studied, and an application of frequency division multiplexing (FDM), space division multiplexing (SDM), and full-duplex communication is being studied.

Note that in the MT and the DU, due to restrictions such as the half-duplex communication, resource management methods in the MT and the DU are being studied (Non Patent Literature 1).

In addition, in order to configure dual connectivity (DC) of the radio link with a parent node, the use of an NR DC framework (MCG/SCG related procedure and the like) is being considered, among other things (Non Patent Literature 2).

### Citation List

### Non-Patent Literature

Non-Patent Literature 1: 3GPP TS 38.213 V16.1.0, 3rd Generation Partnership Project; Technical Specification Group Radio Access Network; NR; Physical layer procedures for control (Release 16), 3GPP, March 2020
Non-Patent Literature 2: 3GPP TS 37.340 V15.6.0, 3rd Generation Partnership Project; Technical Specification Group Radio Access Network; Evolved Universal Terrestrial Radio Access (E-UTRA) and NR; Multi-connectivity; Stage 2 (Release 15), 3GPP, June 2019

### Summary of Invention

Here, in the MT and the DU, if the MT intends to realize dual connectivity with a plurality of parent nodes, since the MT and the DU have inherent restrictions such as half-duplex communication, resource management is further complicated.

Therefore, the following disclosure has been made in view of this situation, and provides a radio communication node capable of realizing appropriate resource management in MT and DU in the case of realizing dual connectivity with a parent node in integrated access and backhaul (IAB).

According to one aspect of the present disclosure, a radio communication node (radio communication node 100B) includes a connection unit (higher node connection unit 170 and lower node connection unit 180) that is used for dual connectivity with a plurality of parent nodes (parent nodes 100A-1 and 100A-2) and a connection to one or a plurality of lower nodes (child node 100C), the parent nodes and the lower node capable of sharing a radio resource, and a receiving unit (radio receiving unit 162) that receives configuration information on the radio resource for at least the lower node from the parent nodes (parent nodes 100A) or a central unit (CU 50).

### Brief Description of Drawings

Fig. 1 is an overall schematic configuration diagram of a radio communication system 10.
Fig. 2 is a diagram illustrating a basic configuration example of IAB.
Fig. 3 is a diagram illustrating a relationship in which frequencies overlap in TDM.
Fig. 4 is a functional block configuration diagram of a parent node 100A.
Fig. 5 is a functional block configuration diagram of an IAB node 100B constituting the IAB node.
Fig. 6 is a diagram illustrating a control sequence of operation example 1 in the present embodiment.
Fig. 7 is a diagram illustrating an example of resource configuration information provided from an IAB donor CU 50.
Fig. 8 is a diagram illustrating an example of different semi-static DU configurations configured for each parent node 100A.
Fig. 9 is a diagram illustrating an example of a control sequence of operation example 2-1-1.
Fig. 10 is a diagram illustrating a correspondence between an AI index field value of a DCI format 2_5 and indication contents (indication).
Fig. 11 is a diagram illustrating a relationship between explicit or implicit indications from MCG and SCG and availability of a DU resource.
Fig. 12 is a diagram illustrating an operation example in which the IAB donor CU 50 transmits resource configuration information of a child node to the parent nodes 100A-1 and 100A-2.
Fig. 13 is a diagram for describing one possible solution that supports operation example 1-1.
Fig. 14 is a diagram illustrating an example of a hardware configuration of the CU 50, radio communication nodes 100A to 100C, and UE 200.

### Description of Embodiments

Hereinafter, embodiments will be described with reference to the drawings. Note that the same functions or configurations will be denoted by the same or similar reference numerals, and a description thereof will be appropriately omitted.

### (1) Overall Schematic Configuration of Radio Communication System

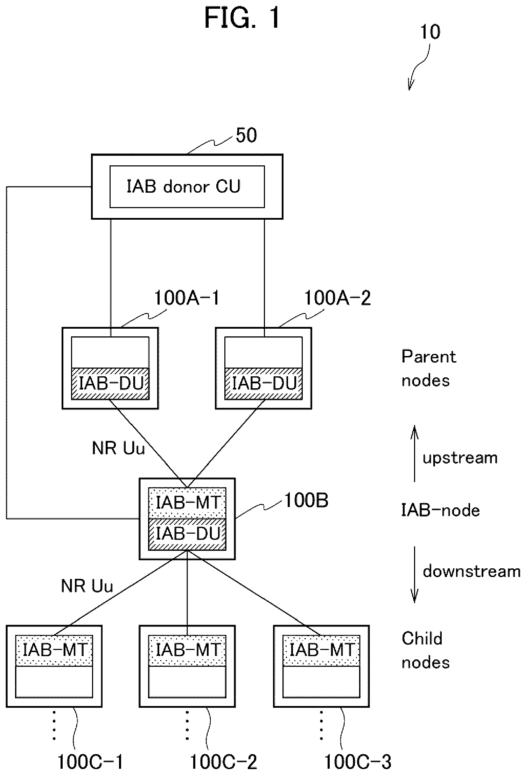

Fig. 1 is an overall schematic configuration diagram of a radio communication system 10 according to the present embodiment. The radio communication system 10 is a radio communication system according to 5G New Radio (NR) and is constituted by a plurality of radio communication nodes and terminals.

Specifically, the radio communication system 10 includes a central unit 50 (hereinafter, CU 50), a radio communication node (including a parent node 100A, an IAB node 100B, and a lower node 100C), and a user terminal 200 (hereinafter, UE 200).

The radio communication nodes 100A, 100B, and 100C can configure radio access with the UE 200 and radio backhaul (BH) between the radio communication nodes. Specifically, a backhaul (transmission line) by radio link is configured between the parent node 100A and the IAB node 100B, and between the IAB node 100B and the lower node 100C.

In this way, the configuration in which the radio access with the UE 200 and the radio backhaul between the radio communication nodes are integrated is called Integrated Access and Backhaul (IAB).

The IAB reuses the existing function and interface that are defined for the radio access. In particular, Mobile-Termination (MT), gNB-Distributed Unit (gNB-DU), gNB-Central Unit (gNB-CU), User Plane Function (UPF), Access and Mobility Management Function (AMF), and Session Management Function (SMF), and corresponding interfaces such as NR Uu (between MT to gNB/DU), F1, NG, X2, and N4 may be used as a baseline.

The parent node 100A is connected to an NR radio access network (NG-RAN) and a core network (Next Generation Core (NGC) or 5GC) via a wired transmission line such as a fiber transport. The NG-RAN/NGC includes a Central Unit 50 (CU 50) that is a communication node. Note that the NG-RAN and the NGC may be simply expressed as "network". The number of parent nodes 100A is not limited to two, but in the present embodiment, for the purpose of describing a case where dual connectivity (DC) is realized, one parent node may be called a parent node 100A-1 and the other parent node may be called a parent node 100A-2. Here, the parent nodes 100A-1 and 100A-2 are classified into a Master Cell Group (MCG) that is a group of cells formed by a master radio base station, and a Secondary Cell Group (SCG) that is a group of cells formed by a secondary radio base station.

The IAB node 100B is connected to an NR radio access network (NG-RAN) and a core network (NGC or 5GC) via a wired transmission line such as a fiber transport. The NG-RAN/NGC includes the CU 50 that is a communication node. Note that as illustrated in Fig. 1, the IAB node 100B can be simultaneously connected to a plurality of parent nodes 100A by the dual connectivity (DC). That is, in the present embodiment, the technology initially defined as the dual connectivity (DC) in a radio access link in the 3rd Generation Partnership Project (3GPP) may be used for the DC in the radio backhaul (see Non Patent Literature 2).

Note that the CU 50 may be constituted by any of the above-described UPF, AMF, and SMF or a combination thereof. Alternatively, the CU 50 may be the gNB-CU as described above. In addition, in the IAB, the CU 50 may be referred to as, in particular, the IAB donor CU.

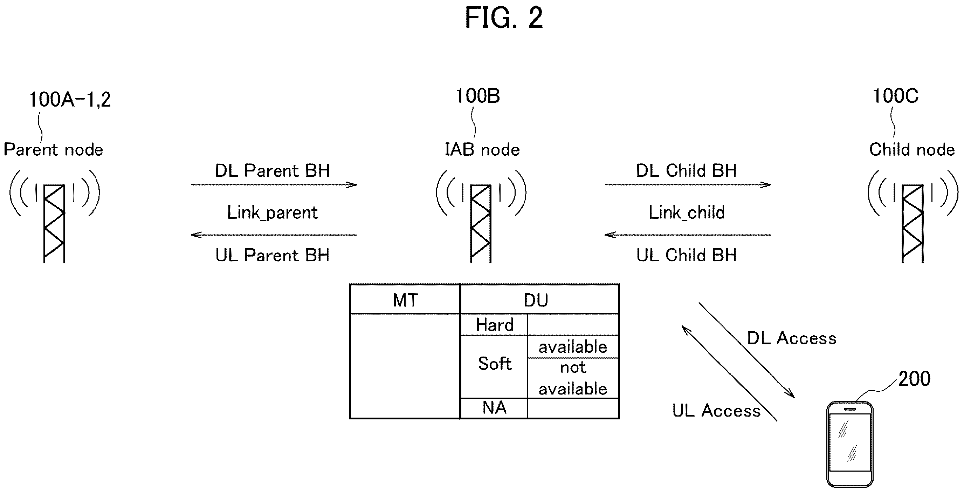

Fig. 2 is a diagram illustrating a basic configuration example of the IAB. As illustrated in Fig. 2, in the present embodiment, the radio communication node 100A constitutes a parent node in the IAB, the radio communication node 100B constitutes an IAB node in the IAB, and the radio communication node 100C constitutes a child node in the IAB. Note that in the present embodiment, the child node 100C is illustrated as a separate housing from the UE 200, but the lower node may include the UE 200 in addition to the child node. Therefore, in the present embodiment, the child node 100C may be read as UE200 and applied.

Note that the parent node may be referred to as a higher node in relation to the IAB node. Therefore, in the present embodiment, the parent node may be read as the higher node and applied, or the higher node may be read as the parent node and applied. Note that the higher node may include the IAB donor CU 50 in addition to the parent node 100A. In addition, the IAB node 100B may be referred to as a child node or a lower node in relation to the parent node 100A.

As described above, the UE 200 may configure the child node as the child node or the lower node in the IAB. Therefore, in the present embodiment, the child node may be read as the lower node and applied, or the lower node may be read as the child node and applied. The IAB node 100B may be referred to as a parent node or higher node in relation to the child node, and the child node 100C may be referred to as a child node or a lower node in relation to the IAB node 100B.

A radio link is established between the parent node and the IAB node. Specifically, the radio link called Link_parent is established.

A radio link is established between the child node and the IAB node. Specifically, the radio link called Link_child is established.

The radio link established between such radio communication nodes may be called a radio backhaul link. The Link_parent is constituted by downlink DL Parent BH and uplink UL Parent BH. The Link_child is constituted by downlink DL Child BH and uplink UL Child BH.

Note that the radio link established between the UE 200 and the IAB node or the parent node is called a radio access link. Specifically, the radio link is constituted by downlink DL Access and uplink UL Access.

In the present embodiment, the radio backhaul link and the radio access link can share radio resources due to restrictions such as half-duplex communication, and as a result, resource division technologies such as time division multiplexing (TDM), frequency division multiplexing (FDM), space division multiplexing (SDM) are required.

The IAB node includes the Mobile Termination (MT) that is a function to connect to the higher node such as the parent node and the Distributed Unit (DU) that is a function to connect to the lower node such as the child node or the UE 200. Although omitted in Fig. 2, the parent node and the child node also have the MT and the DU (see Fig. 1).

The radio resource used by the DU include downlink (DL), uplink (UL), and flexible resources (D/U/F) from the viewpoint of the DU, and the radio resource is classified into any type of Hard, Soft, or Not Available (H/S/NA). In addition, available or not available is defined within the Soft (S).

The flexible resource (F) is a resource that is available for either DL or UL.

In addition, the "Hard" indicates that corresponding radio resource is always available for the DU child link connected to the lower node such as the child node or the UE, that is, indicates that the radio resource is designated as being exclusively available for the lower node. On the other hand, the "Soft" indicates that availability of the corresponding radio resource for the DU child link is explicitly or implicitly controlled by the higher node such as the parent node or the CU, that is, indicates that the radio resource is not designated as being exclusively available for the lower node. Note that the radio resource for the lower node that is configured as the Soft may be called the DU Soft resource.

Therefore, as the DU resource, any one of DL-H, DL-S, UL-H, UL-S, F-H, F-S, or NA is configured.

The configuration example of the IAB illustrated in Fig. 2 is assumed on CU/DU division, but the configuration of the IAB is not necessarily limited to such a configuration. For example, in the radio backhaul, the IAB may be constituted by tunneling using GPRS tunneling protocol (GTP)-U/user datagram protocol (UDP)/Internet protocol (IP).

The main advantage of such an IAB is that NR cells can be flexibly and densely arranged without densifying a transport network. The IAB can be applied to various scenarios such as arrangement of small cells outdoors, indoors and support of a mobile relay (for example, in a bus and a train).

In addition, as illustrated in Figs. 1 and 2, the IAB may also support deployment by NR-only standalone (SA), or deployment by non-standalone (NSA) that includes other RATs (such as LTE).

In the present embodiment, the radio access and the radio backhaul operate on the assumption of the half-duplex communication. However, the radio access and the radio backhaul are not necessarily limited to the half-duplex communication, and the full-duplex communication such as simultaneous communication (Tx and/or Rx) in the MT and the DU may be used as long as the requirements are satisfied.

In addition, as a multiplexing method, time division multiplexing (TDM), space division multiplexing (SDM), frequency division multiplexing (FDM), and the like are available.

When the IAB node 100B operates in the half-duplex communication, the DL Parent BH becomes a receiving (RX) side, and the UL Parent BH becomes a transmitting (TX) side, and the DL Child BH becomes a transmitting (TX) side, and the UL Child BH becomes a receiving (RX) side. In addition, in the case of the Time Division Duplex (TDD), a DL/UL configuration pattern in the IAB node is not limited only to DL-F-UL, and configuration patterns such as UL-F-DL may be applied to only radio backhaul (BH).

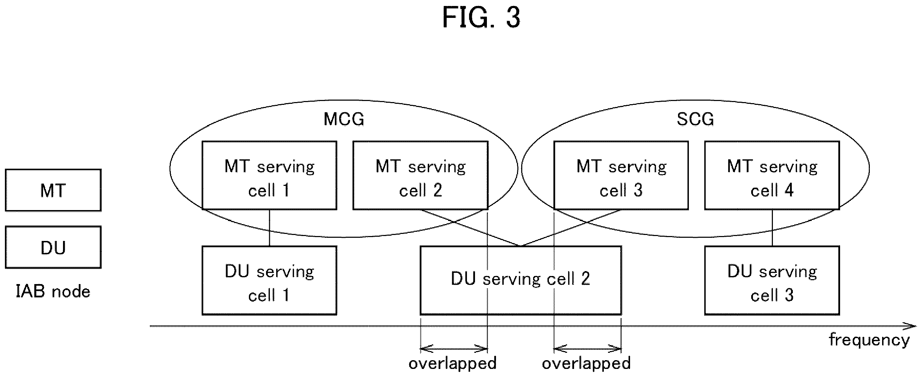

Further, the present embodiment mainly describes that the backhaul link and the access link use the TDM to realize the simultaneous operation of the DU and the MT of the IAB node, but is not limited thereto, and the backhaul link and the access link may use the FDM/SDM. Here, Fig. 3 is a diagram illustrating a relationship in which frequency bands overlap in the MT and the DU.

As illustrated in Fig. 3, different frequency bands are allocated to the MT serving cells on the MT side, and different frequency bands are also allocated to the DU serving cells on the DU side, and do not overlap with each other. Here, when the radio link connection on the MT side and the radio link connection on the DU side share a radio resource by the half-duplex communication or the like, the time resource may be allocated by the TDM or the like. For example, the time resource is allocated to an MT serving cell 1 and a DU serving cell 1, and an MT serving cell 4 and a DU serving cell 3, respectively, so allocation control of the radio resource is performed without conflict.

In addition, when dual connectivity (DC) with an MT serving cell 2 and an MT serving cell 3 is realized in the IAB node, as illustrated in the figure, each of the frequency bands of the MT serving cells 2 and 3 may overlap with the DU serving cell 2, and in such a case, the allocation control of the radio resource becomes more complicated. Therefore, in the present embodiment, the radio resource is controlled by an appropriate method as described in detail below. That is, in a DC scenario, the DU serving cell may overlap with some of the MT serving cells belonging to the MCG and the other MT serving cells belonging to the SCG, and in the present embodiment, it has been intensively studied that the IAB node can accurately determine the availability of the DU resource.

### (2) Functional Block Configuration of Radio Communication System

Next, the functional block configuration of the parent node 100A and the IAB node 100B constituting the radio communication system 10 will be described. Although not specified because the explanation is duplicated, the child node 100C may also have the same configuration as the IAB node 100B.

### (2.1) Parent Node 100A

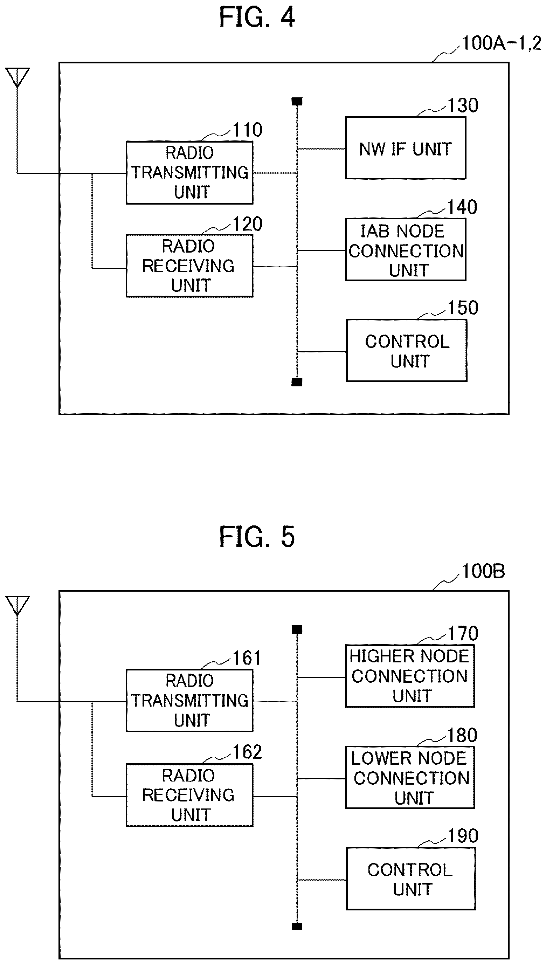

Fig. 4 is a functional block configuration diagram of the parent node 100A. As illustrated in Fig. 4, the parent node 100A includes a radio transmitting unit 110, a radio receiving unit 120, a NW IF unit 130, an IAB node connection unit 140, and a control unit 150.

The radio transmitting unit 110 transmits a radio signal according to the 5G specifications. In addition, the radio receiving unit 120 transmits the radio signal according to the 5G specifications. In the present embodiment, the radio transmitting unit 110 and the radio receiving unit 120 perform radio communication with the IAB node 100B.

In the present embodiment, the parent node 100A has a function of the MT and the DU, and the radio transmitting unit 110 and the radio receiving unit 120 also transmit and receive the radio signal corresponding to the MT/DU.

In the present embodiment, the radio transmitting unit 110 may transmit, to the IAB node 100B, the configuration information on the availability of the radio resource for the parent node and/or the lower node in the IAB node 100B. More specifically, the radio transmitting unit 110 may transmit, to the IAB node 100B, the configuration information on the availability of the radio resource of the MT side/DU side in the IAB node 100B. A specific example of the configuration information includes information (H/S/NA) on "Hard (H)" designating that the radio resource is available exclusively for the lower node (DU), "Soft (S)" designating that the radio resource is not available exclusively for the lower node, or "Not Available (NA)" designating that the radio resource is not available for the lower node.

In addition, the configuration information may be information that designates the available or not available for the lower node, which can be designated when the radio resource is not available exclusively for the lower node (in the case of Soft (S)). For example, the configuration information may be information called dynamic indication or availability indicator (AI). Further, the above information may include information (UL/DL/F) that further designates uplink (UL), downlink (DL), Flexible that is available for any of DL or UL in the communication for the lower node (DU) in the IAB node 100B. Note that the configuration information includes not only the information explicitly indicated but also the information implicitly indicated. Specifically, when there is no explicit indication for the radio resource configured as the Soft from the network, the CU 50, or the parent node for a certain period of time, this is interpreted as an implicit indication, and based on the configuration information, for example, the radio resource may be controlled to be available for the lower node.

The NW IF unit 130 provides a communication interface that realizes connection with the NGC side or the like such as the CU 50. For example, the NW IF unit 130 may include interfaces such as X2, Xn, N2, and N3.

The IAB node connection unit 140 provides an interface or the like that realizes the connection with the IAB node (or with a child node including UE alternatively). Specifically, the IAB node connection unit 140 provides the function of the Distributed Unit (DU). That is, the IAB node connection unit 140 is used for connection with the IAB node (or with the child node).

Note that the IAB node may be expressed as a RAN node that supports the radio access with the UE 200 and backhauls access traffic by radio. In addition, the parent node or the IAB donor may be expressed as the RAN node that provides an UE's interface to a core network and a radio backhaul function to the IAB node.

The control unit 150 executes control of each functional block constituting the radio parent node 100A. For example, the control unit 150 may execute control regarding the DU Soft resource of the IAB node 100B via the transmission of the configuration information such as dynamic indication or availability indicator (AI). Note that the control unit 150 may perform the implicit indication by not transmitting the configuration information. For example, the configuration information indicating that the DU resource is the Soft is transmitted from the CU 50 to the IAB node 100B, but the parent node 100A belonging to the MCG or the like does not transmit explicit configuration information on the DU Soft resource, so the implicit indication may be performed. That is, the fact that there is no explicit indication from the network for the radio resource that is available for both the DU and the MT can be the configuration information that indicates the implicit indication.

The control unit 150 may have a semi-static configuration indicating whether the DU Soft resource of the IAB node is available in any of the DL/UL/F. The semi-static configuration may mean that the configuration contents are not changed dynamically, but may be updated or changed based on the indication from the network.

The control unit 150 may acquire the resource configuration information of the child node (IAB node 100B) received from the CU 50 via the NW IF unit 130. For example, the control unit 150 may acquire the configuration information (for example, the type of H/S/NA of the DU resource of the child node) on the resource configuration of the child node as viewed from itself (that is, the IAB node 100B). As a result, for example, when the configuration information of the target DU resource of the received child node is the Soft, the control unit 150 can dynamically control the DU Soft resource.

### (2.2) IAB node 100B

Fig. 5 is a functional block configuration diagram of the IAB node 100B constituting the IAB node. As illustrated in Fig. 5, the IAB node 100B includes a radio transmitting unit 161, a radio receiving unit 162, a higher node connection unit 170, a lower node connection unit 180, and a control unit 190.

As described above, the IAB node 100B has a functional block similar to the parent node 100A described above, but differs from the parent node 100A in that the IAB node 100B includes a higher node connection unit 170 and a lower node connection unit 180, and differs from the parent node 100A in the function of the control unit 190.

The radio transmitting unit 161 transmits a radio signal according to the 5G specifications. In addition, the radio receiving unit 162 receives the radio signal according to the 5G specifications. In the present embodiment, the radio transmitting unit 161 and the radio receiving unit 162 execute radio communication with the higher node such as the parent node 100A and radio communication with the lower node such as the child node (including the case of the UE 200). For example, the radio receiving unit 162 receives configuration information on the radio resource for at least the lower node from the parent node 100A. For example, the radio receiving unit 162 may receive the configuration information on the availability of the radio resource for the parent node and/or the lower node in the IAB node 100B.

The higher node connection unit 170 provides an interface or the like that realizes connection with a node higher than the IAB node. Note that the higher node may be a radio communication node located on the network side, more specifically, on the core network side (which may be called an upstream side or an upper side), than the IAB node. Specifically, the higher node connection unit 170 provides the function of the Mobile Termination (MT). That is, the higher node connection unit 170 is used for connection with the parent nodes 100A-1 and 100A-2 that constitute the higher node in the present embodiment. In particular, in the present embodiment, the higher node connection unit 170 is used for dual connection with the plurality of parent nodes 100A-1 and 100A-2, specifically, dual connectivity.

Note that the higher node connection unit 170 is not limited to the radio communication, and may be connected to the core network side such as the CU 50 via a wired transmission line or the like. As a result, the control unit 190 can receive the configuration information on the radio resource for at least the lower node from the CU 50 via the higher node connection unit 170. For example, the control unit 190 may receive, from the CU 50, the configuration information on the availability of the radio resource for the parent node and/or the lower node in the IAB node 100B via the higher node connection unit 170. Note that the present embodiment is not limited thereto, and the radio receiving unit 120 may acquire the configuration information from the CU 50 by the radio communication.

The lower node connection unit 180 provides an interface or the like that realizes connection with a node lower than the IAB node. Note that the lower node means the radio communication node located on an end user side (which may be called a downstream side or a lower side) than the IAB node.

Specifically, the lower node connection unit 180 provides the function of the Distributed Unit (DU). That is, the lower node connection unit 180 is used for connection with the child node (which may be the UE 200) that constitutes the lower node in the present embodiment.

In the present embodiment, the higher node connection unit 170 is used for the dual connectivity with the plurality of parent nodes 100A, and the lower node connection unit 180 may be used for connection with one or a plurality of lower nodes (the child node 100C and the like), and these higher node connection (MT connection) and lower node connection (DU connections) can share radio resources.

The control unit 190 executes control of each functional block constituting the IAB node 100B. In particular, in the present embodiment, the control unit 190 executes control related to the radio resource.

As described above, the radio resource in the IAB node 100B can be used for both the MT and the DU. Furthermore, the MT can be connected to two parent nodes 100A-1 and 100A-2 by the dual connectivity (DC). Therefore, the control unit 190 controls the radio resource that can be shared by a plurality of parent nodes and at least one lower node.

More specifically, the control unit 190 controls the radio resource for the parent node (MT side) and/or the lower node (DU side) based on the configuration information received from the CU 50 or the parent node 100A. The control unit 190 may further control the radio resource for the parent node (MT side) and/or the lower node (DU side) based on the usage status of the radio resource for the parent node. In addition, the control unit 190 further controls the radio resource for the parent node and/or the lower node based on an implicit situation such as when there is no explicit configuration information from the CU 50 or the parent node 100A for a certain period of time.

A channel includes a control channel and a data channel. The control channel includes a Physical Downlink Control Channel (PDCCH), a Physical Uplink Control Channel (PUCCH), a Physical Random Access Channel (PRACH), a Physical Broadcast Channel (PBCH), and the like.

In addition, the data channel includes a Physical Downlink Shared Channel (PDSCH), a Physical Uplink Shared Channel (PUSCH), and the like.

Note that a reference signal includes a Demodulation Reference Signal (DMRS), a Sounding Reference Signal (SRS), a Phase Tracking Reference Signal (PTRS), and a Channel State Information-Reference Signal (CSI-RS), and a signal includes the channels and the reference signal. Further, the data may mean data transmitted via the data channel.

The UCI is symmetric control information of Downlink Control Information (DCI) and is transmitted via PUCCH or PUSCH. The UCI may include Scheduling Request (SR), Hybrid Automatic Repeat Request (HARQ) ACK/NACK, Channel Quality Indicator (CQI), and the like.

The control unit 190 may control the radio resource based on the availability of the radio resource indicated by the configuration information. Specifically, in addition to the H/S/NA information indicated by the configuration information, the control unit 190 may determine the availability of the DU resource based on the configuration information of Indicated as Available (IA) or Indicated as not Available (INA) in the case where the target resource is the Soft(S) or in other cases. Note that the "IA" means that the DU resource is explicitly or implicitly indicated as available. In addition, the "INA" means that the DU resource is explicitly or implicitly indicated as not available. In addition to the dynamic indication as the configuration information, the control unit 190 may control the DU resource based on the configuration information such as the availability indicator (AI). Further, for example, when the radio resource is not designated to be exclusively available for the lower node such as when the target resource is the Soft (S), the control unit 190 receives the configuration information (for example, dynamic indication or the like) on the availability of the radio resource for the lower node from the CU 50 or one of the plurality of parent nodes 100A-1 and 100A-2, and may control the radio resource for the parent node (MT side) and/or the lower node (DU side) based on the received configuration information.

In addition, the control unit 190 may grasp the usage status of the radio resource for the parent node (MT side) via the higher node connection unit 170, and may grasp the usage status of the radio resource for the lower node (DU side) via the lower node connection unit 180. Then, the control unit 190 may control the radio resource based on the usage status of the radio resource for the parent node and/or the lower node in addition to the configuration information.

Further, when the plurality of pieces of configuration information is received, the control unit 190 may control the radio resource as follows. That is, for example, when the radio resource is designated as being exclusively available (Hard) for the lower node in the entire configuration information, the control unit 190 may control the radio resource to be available for the lower node. Further, when it is indicated that the radio resource is not available for the lower node in at least one configuration information, the control unit 190 may control the radio resource not to be available for the lower node. Further, the control unit 190 may control whether or not the radio resource is available for the lower node based on the configuration information received from the parent node (for example, parent node in which the DU resource is configured as the Soft) in which the radio resource is not designated to be exclusively available for the lower node among the plurality of pieces of configuration information.

Further, when the plurality of pieces of configuration information is received and the configuration information from at least one parent node indicates that the radio resource is available for the lower node, the control unit 190 may control the radio resource to be used for the lower node. Further, when the plurality of pieces of configuration information is received and the radio resource is not available for the higher node, the control unit 190 may control the radio resource to be available for the lower node.

As described above, even when the plurality of pieces of configuration information is received from, for example, the plurality of parent nodes, the control unit 190 can appropriately perform the allocation control of the MT/DU radio resource. Note that that the above-described conditions may be implemented by arbitrarily combining some or all of them.

### (3) Operation of Radio Communication System

Next, the operation of the radio communication system 10 will be described. Specifically, the operation of controlling the radio resource in the IAB node when the simultaneous operation of the MT/DU is realized together with the dual connectivity of the parent node by using the TDM, the SDM, or the FDM under the half-duplex restriction will be described.

### (3.1) Schematic Operation

As described above with reference to Fig. 3, in the case of realizing the simultaneous operation (the transmission and reception of MT Tx/DU Tx (MT transmission/DU transmission), MT Tx/DU Rx (MT transmission/DU reception), MT Rx/DU Tx (MT reception/DU transmission), MT Rx/DU Rx (MT reception/DU reception), and the like) of the MT/DU together with the dual connectivity (DC) of the plurality of parent nodes, there is a probability that a radio resource conflict in the MT connection for the parent node and the DU connection for the lower node that realize the DC occurs due to the half-duplex restriction, and the like, so it is necessary to control the radio resource by an appropriate method. Therefore, various control procedures of the radio resource will be described in the following embodiments.

### (3.1-1) Operation Example 1-1

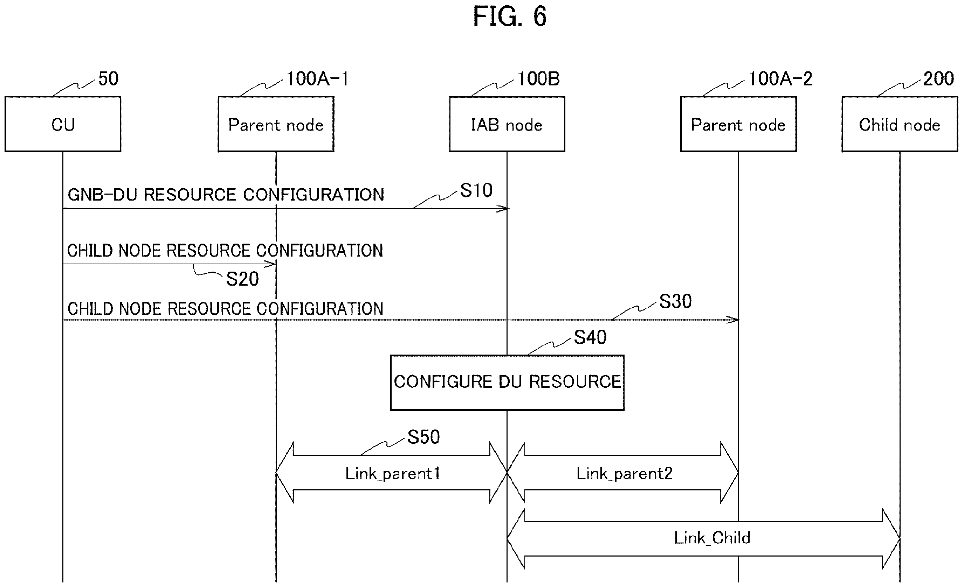

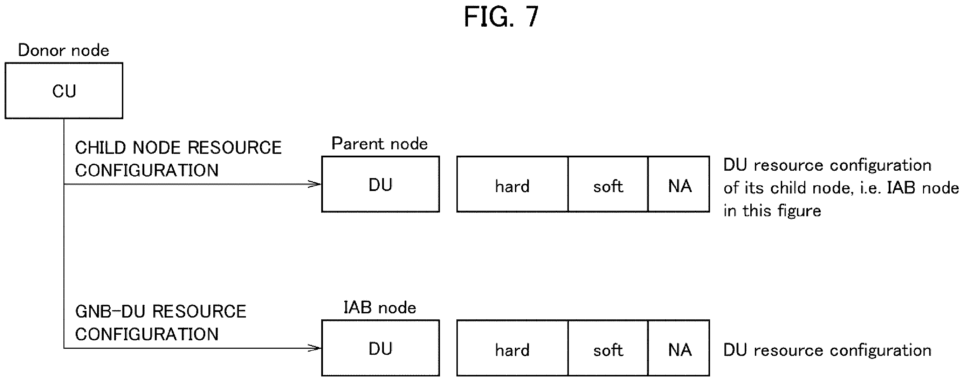

Next, an operation example related to reporting of a Flexible DU resource (transmission of resource information) and the like of the IAB node will be described. Here, Fig. 6 is a diagram illustrating a control sequence of operation example 1 in the present embodiment, and Fig. 7 is a diagram illustrating an example of the resource configuration information provided from the IAB donor CU 50. Note that in this operation example 1-1, it is assumed that one semi-static DU configuration is configured and the configuration information is shared by a plurality of parent nodes and child nodes.

As illustrated in Fig. 6, first, the IAB donor CU 50 transmits GNB-DU RESOURCE CONFIGURATION, which is the resource configuration information (for example, H/S/NA configuration information) of the IAB node 100B, to the IAB node 100B (S10) (For the gNB configuration, see 3GPP TSG-RAN WG3 Meeting #107-e, "(TP to NR_IAB BL CR to 38473) PHY layer parameter configuration", R3-201355, March 2020).

Subsequently, the IAB donor CU 50 transmits CHILD RESOURCE CONFIGURATION, which is the resource configuration information (for example, H/S/NA configuration information) of the child node, to each of the two parent nodes 100A-1 and 100A-2 (S20 and S30). That is, the parent node can obtain a semi-static configuration of the DU resource of the child node via CHILD NODE RESOURCE CONFIGURATION from the CU 50. Note that the child node here is the IAB node 100B that is the child node seen from the parent nodes 100A-1 and 100A-2. Here, as illustrated in Fig. 7, the configuration information of CHILD RESOURCE CONFIGURATION and GNB-DU RESOURCE CONFIGURATION transmitted from the IAB donor CU 50 indicates the semi-static configuration (H/S/NA) of the DU resource of the IAB node 100B.

Therefore, the control unit 190 of the IAB node 100B can configure the DU resource in the Hard/Soft/NA resource type for each serving cell of the IAB node DU based on the GNB-DU RESOURCE CONFIGURATION from the CU 50 (S40). Note that when the downlink (DL), uplink (UL), or flexible (F) symbol is configured as Hard (H) in the configuration information, the control unit 190 of the IAB node 100B can configure the target resource exclusively available for the lower node, so the transmission (DL), the reception (UL), or either transmission or reception (F) can each be performed within the symbol. On the other hand, when the symbol is configured to be Not Availability (NA) in the configuration information, the control unit 190 of the IAB node 100B does not transmit or receive the symbol as the IAB node DU.

When the DU resource is configured in this way (S40), the IAB node 100B can control the radio resource in the dual connectivity with the parent node 100A-1 and the parent node 100A-2 and the connection with the child node 200 (S50).

### (3.1-2) Operation Example 1-2

Next, operation example 1-2 regarding the case where a plurality of different semi-static configurations are configured will be described. That is, in operation example 1-2, a plurality of semi-static DU configurations, different for each parent node of the IAB node, are configured, and each parent node is provided with semi-static DU configurations corresponding to itself. Note that since the control sequence is the same as that in Fig. 6 described above, Fig. 6 will be used for description.

As illustrated in Fig. 6, first, the IAB donor CU 50 transmits GNB-DU RESOURCE CONFIGURATION, which is the resource configuration information of the IAB node 100B configured for each parent nodes 100A-1 and 100A-2, to the IAB node 100B (S30). That is, two pieces of configuration information (for example, Hard/Soft/NA DU resource types for each parent node) is transmitted from the CU 50 to the IAB node 100B.

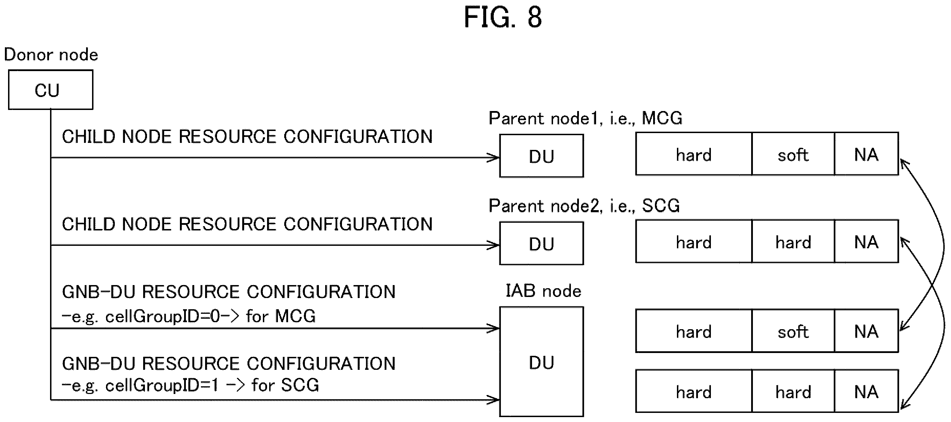

Subsequently, the IAB donor CU 50 transmits CHILD RESOURCE CONFIGURATION, which is the resource configuration information of different child nodes, to each of the two parent nodes 100A-1 and 100A-2 (S10 and S20). That is, the CHILD NODE RESOURCE CONFIGURATION for the parent node 100A-1 and the CHILD NODE RESOURCE CONFIGURATION for the parent node 100A-2 are provided from the CU 50, and each parent node 100A can obtain the semi-static configuration of the DU resource of the child node (IAB node 100B) configured for each parent node 100A. Here, Fig. 8 is a diagram illustrating an example of different semi-static DU configurations configured for each parent node 100A.

As illustrated in Fig. 8, in operation 1-2, the hard/soft/NA semi-static configurations of the DU resource are configured separately for the two parent nodes (MCG or SCG). Note that CellGroupID of the MT serving cell may be included in the semi-static configuration signaling of the DU resource hard/soft/NA.

Then, the control unit 190 of the IAB node 100B can configure the DU resource in the Hard/Soft/NA resource type for each serving cell of the IAB node DU based on the GNB-DU RESOURCE CONFIGURATION from the CU 50 (S40).

For example, when the radio resource is designated as the Hard or the NA, the IAB node 100B operates as follows. For example, as in the left column of each configuration information in Fig. 8, when DL/UL/F symbols are configured as Hard for both parent nodes (MCG and SCG), the IAB node 100B can execute Tx/Rx/"either Tx or Rx" in the symbol for the DU serving cell, respectively. On the other hand, as in the right column of each configuration information in Fig. 8, when the symbol is configured as the NA for any parent node (MCG or SCG), the control unit 190 of the IAB node 100B does not perform the transmission and reception of the symbol as the DU.

That is, the control unit 190 of the IAB node 100B operates the DU when all of the plurality of pieces of configuration information indicates the "Hard", but does not operate the MT. Then, the control unit 190 of the IAB node 100B does not operate the DU but operates the MT when there is even one "NA" in the plurality of pieces of configuration information.

Note that as in a middle column in Fig. 8, when being configured as Soft for one parent node 1 (MCG) and configured as Hard for another parent node 2 (SCG), the IAB node 100B requires only the dynamic indication of the DU soft resource from the parent node 1 (MCG) designated with Soft. As a result, the complexity of the IAB node is reduced. Note that the details of the dynamic indication will be described later.

As described above, when the DU resource is configured (S40), the IAB node 100B can control the radio resource in the dual connectivity with the parent node 100A-1 and the parent node 100A-2 and the connection with the child node 200 (S50).

### (3.2) Operation Example 2

Operation example 2 related to the dynamic indication will be described below.

The explicit and implicit indications are supported for the dynamic indication of the DU soft resource. When the downlink (DL), uplink (UL), or flexible (F) symbol is configured as Soft (S), the IAB node DU can perform the transmission, the reception, or either the transmission or the reception within the symbol only in the following cases.
· When the IAB node MT does not perform the transmission or reception with a symbol (implicit indication)
· When the IAB node MT attempts to perform the transmission or the reception within a symbol, and the transmission or the reception within the symbol does not change due to the use of the symbol by the IAB node DU (implicit indication).
· When the IAB node MT detects the DCI format 2_5, and the AI index field value indicates that the soft symbol is available (explicit indication).
* In the case of the DCI format 2_5, the IAB node is provided with a search space set configuration by Search Space-IAB to monitor the PDCCH. The search space set configuration is configured for each MT serving cell.

The operation example 2 describes a method of notifying a dynamic indication of a soft resource of the IAB node DU when the IAB node is connected to the plurality of parent nodes 100A-1 and 100A-2.

Hereinafter, a specific operation example will be described as follows.

(Operation Example 2-1) When the configuration information (H/S/NA) of the DU resource is one and is common to both the MCG and SCG.
(Operation Example 2-1-1) The IAB node expects the dynamic indication from only one parent node
(Operation Example 2-1-2) The IAB node expects the dynamic indications from both parent nodes
(Operation Example 2-1-3) The combination/configuration of the above
(Operation Example 2-2) When the configuration information (H/S/NA) of the DU resource is configured separately and is independently configured for the MCG and SCG.

### (3.2-1) Operation Example 2-1

In the operation example 2-1, the dynamic indication for the DU soft resource to the IAB node is notified from one parent node as follows. Note that in the operation example 2-1, the IAB node expects only the dynamic indication of the soft resource availability from one parent node (MCG/SCG). The IAB node assumes that the other parent node (SCG/MCG) does not use the soft resource.

### (3.2-1-1) Operation Example 2-1-1

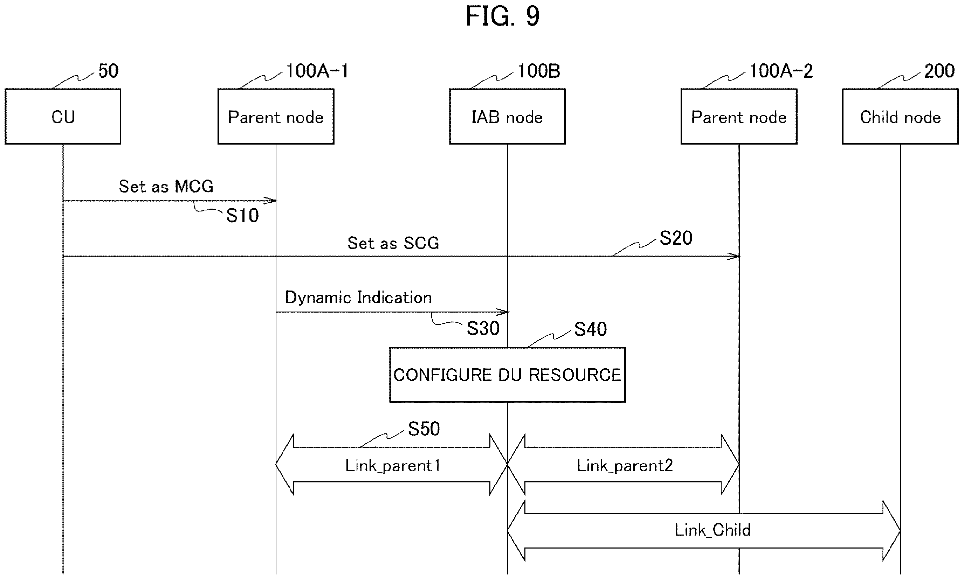

In option 1 of the operation example 2-1-1, the parent node that transmits the dynamic indication is clarified by the specification which defines the parent node, for example, as the MCG. Fig. 9 is a diagram illustrating an example of a control sequence of the operation example 2-1-1.

As illustrated in Fig. 9, the CU 50 transmits to the parent node 100A-1 configuration information that designates that the parent node 100A-1 has the role of the MCG (S10), and transmits to the parent node 100A-2 the configuration information that designates that the parent node 100A-2 has the role of the SCG (S20).

Then, the parent node 100A-1 that belongs to the MCG transmits to the IAB node 100B the dynamic indication for the DU soft resource of the IAB node 100B as the configuration information (S30).

As a result, the IAB node 100B can determine the availability of the DU soft resource based on the configuration information of the dynamic indication (S40).

When the DU resource is configured (S40), the IAB node 100B can control the radio resource in the dual connectivity with the parent node 100A-1 and the parent node 100A-2 and in the connection with the child node 200 (S50).

In this way, in the operation example 2-1-1, the specification predefines which parent node the dynamic indication is expected from. For example, when the IAB node is predefined to plan to detect only the DCI format 2_5 from the MCG and the dynamic indication indicates that the soft resource is available by the MCG, the IAB node DU can use resources. On the other hand, the IAB node does not expect to be provided with a PDCCH search space for the DCI format 2_5 on the SCG. Alternatively, it can be specified that the PDCCH search space for the DCI format 2_5 is provided on the SCG, but the IAB node does not detect the DCI format 2_5 on the SCG. The IAB node is assumed that the SCG does not use resources, that is, the SCG does not use the soft resources indicated by the semi-static signaling.

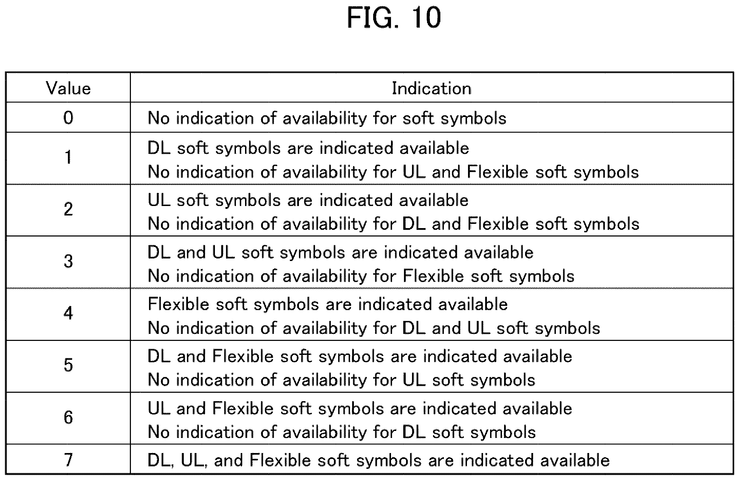

An availability indicator (AI) index field value of the DCI format 2_5 indicates the availability of the soft symbol. The IAB node DU can provide a plurality of combinations of availability by availabilityCombinations for each serving cell. Each availabilityCombinations includes resourceAvailability indicating that the soft symbol is available in one or more slots of the IAB node DU serving cell, and mapping of the corresponding AI index field values of the DCI format 2_5 provided by availabilityCombinationId to the combination of the availabilities of the soft symbols provided by the AvailabilityCombination. Here, Fig. 10 is a diagram illustrating the correspondence between the AI index field value of the DCI format 2_5 and the indication contents (indication).

The mapping between the resourceAvailability and the indication is as illustrated in Fig. 10. That is,
0. It is not indicated whether the soft symbol is available
1. Indicate that the DL soft symbol is available. It is not indicated whether the UL and the flexible soft symbols are available.
2. Indicate that the UL soft symbol is available. It is not indicated whether the DL and flexible soft symbols are available.
3. Indicate that the DL and UL soft symbols are available. It is not indicated whether the flexible soft symbol is available.
4. Indicate that the flexible soft symbol is available. It is not indicated whether the DL and UL soft symbols are available.
5. Indicate that the DL and flexible soft symbols are available. It is not indicated whether the UL soft symbol is available
6. Indicate that the UL and flexible soft symbols are available. It is not indicated whether the DL soft symbol is available
7. Indicate that the DL, UL, and flexible soft symbols are available.

As a method for the IAB node to expect a dynamic indication from only one parent node, the following options can be considered in addition to those specified by the above specifications.

### (Option 2 of Operation Example 2-1-1)

In option 2 of the operation example 2-1-1, the network (CU 50 and the like) configures the parent node that transmits the dynamic indication. The configuration method is as follows.

Option 2-1: Explicitly notify the parent node transmitting the dynamic indication using the signaling
Option 2-2: Configure the PDCCH search space only for the parent node that transmits the dynamic indication
Option 2-3: Each parent node is notified as needed

### (Option 2-1 of Operation Example 2-1-1)

Explicitly configure/indicate which cell group (MCG/SCG) the dynamic indication regarding the availability of the soft resource from is possible. Explicit configuration/indication can be provided by the IAB donor CU via RRC or F1-AP, or by the parent node (or cell group) via MAC CE or DCI.

If the dynamic indication is valid, the IAB node is expected to detect the DCI format 2_5 from the cell group, and when it is indicated that the soft resource is available, the IAB node DU can use the resource. If the dynamic indication is not available, the IAB node does not expect to be provided with the PDCCH search space for the DCI format 2_5 on the cell group. Alternatively, the IAB node is provided with the PDCCH search space for the DCI format 2_5, but does not expect to detect the DCI format 2_5 for the cell group. The IAB node assumes that the cell group does not use resources. Note that the configuration/indication may be for each DU serving cell or one configuration/indication may be for all DU serving cells.

### (Option 2-2 of Operation Example 2-1-1)

In the option 2-2, it is determined whether the PDCCH search space for the DCI format 2_5 is configured. When the PDCCH search space for the DCI format 2_5 is configured for each cell group, the IAB node expects to detect DCI format 2_5 from the cell group, and when it is indicated that the soft resource is available, the IAB node DU can use resources. On the other hand, when the PDCCH search space of the DCI format 2_5 is not configured, the IAB node assumes that the cell group does not use resources.

### (Option 2-3 of Operation Example 2-1-1)

For each DU serving cell, it is determined by whether the AvailabilityIndicator (AI) configured in the MCG or the SCG includes the AvailabilityCombinationsPerCell for the DU serving cell. For the MT serving cell of each cell group (MCG/SCG), when the AvailabilityIndicator (AI) includes the AvailabilityCombinationsPerCell of the DU serving cell, the IAB node is expected to detect the DCI format 2_5 of the DU serving cell from the cell group, and when it is indicated that the soft resource is available, the IAB node DU can use resources. On the other hand, when the AvailabilityIndicator does not include the AvalabilityCombinationsPerCell of the DU serving cell, the IAB node assumes that the cell group does not use resources.

Note that the resource adjustment between the MCG and the SCG can be configured on a CU basis, or can be implemented in other ways (see operation example 2-1-3) .

### (3.2-1-2) Operation Example 2-1-2

An operation example 2-1-2 when the dynamic indication is notified from the plurality of parent nodes will be described. In the example, the IAB node expects the dynamic indication from both parent nodes. When the IAB node 100B receives a plurality of notifications, the conditions for operating the DU soft resource for the lower node are as follows.
· When the indication (configuration information) of the IA (indicated as Available: DU soft resource available) is transmitted from all the parent nodes
· When the indication of the IA is transmitted from some of the parent nodes and the MT resource is not used
· When the indication from all the parent nodes is not made, but the MT resource is not used

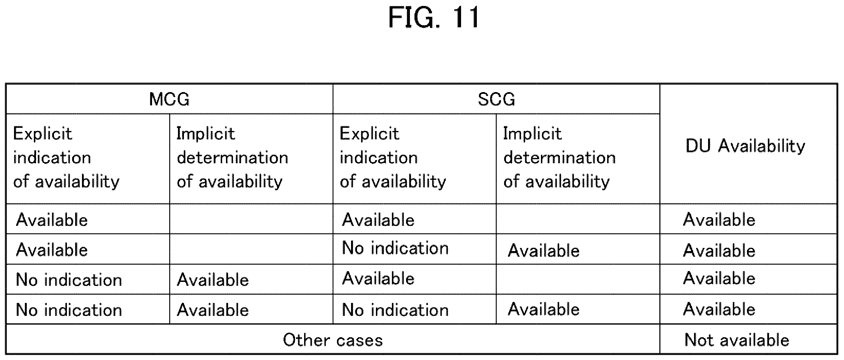

Here, Fig. 11 is a diagram illustrating the relationship between the explicit or implicit indication from the MCG and the SCG and the availability of the DU resource. In the operation example 2-1-2, the IAB node 100B is expected to detect the DCI format 2_5 to receive the dynamic indication of the availability of the soft resource from both the parent nodes 100A-1 and 100A-2.

As illustrated in Fig. 11, the IAB node DU can use the soft resource in the following cases. As illustrated in a third row of the table in Fig. 11, when the IAB node detects the DCI format 2_5 from both the parent nodes and indicates that the soft symbol is available (when there is the explicit indication from both the parent nodes), the DU soft resource is available.

In addition, as illustrated in fourth and fifth rows of a table in Fig. 11, when the IAB node detects the DCI format 2_5, which indicates that the soft symbol is available, from only one parent node (MCG or SCG) and does not affect the transmission and reception capability of the MT according to the use state (configuration and scheduling) of the other parent node (SCG or MCG) (when there are the explicit indication from one parent node and the implicit indication from the other parent node), the DU soft resource is available.

In addition, as illustrated in a sixth row of the table in Fig. 11, there is no explicit indication of the availability of the soft resource from both the parent nodes, but the use of the resource does not affect the transmission and reception capability of the MT according to the usage status (configuration and scheduling) of both the MCG and SCG (when there is the implicit indication from both the parent nodes), the DU soft resource is available.

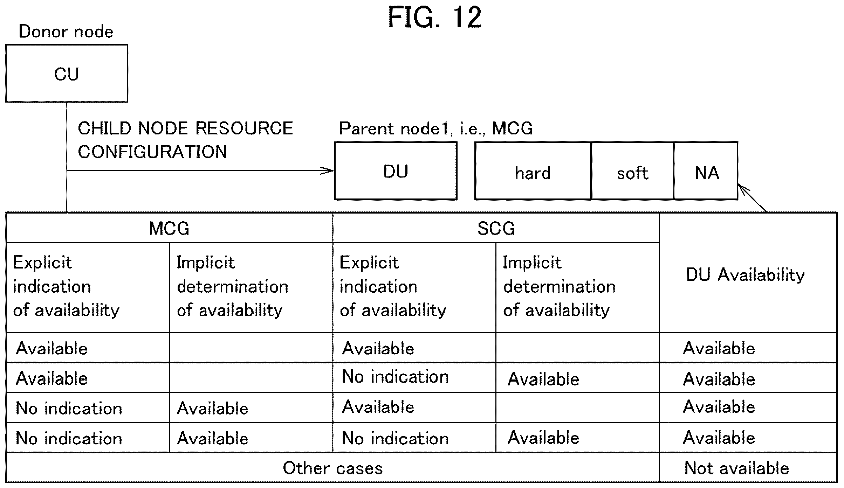

As the assumption of the operation example 2-1-2, as illustrated in Fig. 12, the IAB donor CU 50 transmits CHILD RESOURCE CONFIGURATION, which is the resource configuration information of the child node, to the parent nodes 100A-1 and 100A-2, and the configuration information of the DU soft resource may be acquired.

Further, as another embodiment of the above-described operation example 2-1-2, in the case where the IAB node is connected to two parent nodes, when the downlink, uplink, or flexible symbol is configured as the Soft, the IAB node DU may perform the transmission, the reception, or either the transmission or the reception, respectively, within the symbol only in the following cases:
· In the case of the usage status in which the IAB node MT does not perform the transmission and reception with a symbol
· When the IAB node MT attempts to transmit or receive the symbol and the transmission or reception of the symbol does not change for the IAB node DU to use the symbol.
· When the IAB node MT detects the DCI format 2_5 from both the parent nodes by the AI index field value indicating that the soft symbol is available.
· In the case of the usage status in which the IAB node MT detects, from the MCG (or SCG), the DCI format 2_5 having the AI index field value indicating that the soft symbol is available, and the IAB node MT does not perform the transmission and reception with the symbol on the SCG (or MCG).
· When the IAB node MT detects, from the MCG (or SCG), the DCI format 2_5 having the AI index field value indicating that the soft symbol is available, and the transmission and reception of the MT in the symbol on the SCG (or MCG) is not changed due to the use of the symbol by the IAB node DU.

### (3.2-1-3) Operation Example 2-1-3

In this example, the combination/configuration of the option 2 of the above-described operation example 2-1-1 and the operation example 2-1-2 will be described. That is, the IAB node 100B operates in the option 2 of the operation example 2-1-1 when receiving one configuration information from one parent node, and operates in the operation example 2-1-2 when receiving the configuration information from the plurality of parent nodes.

When there is no notification from the parent node, one of the following default operations is performed.
Alt 1: Operate the DU
Alt 2: Operate the DU when the MT resource is not used
Alt 3: Not operate the DU

More specifically, according to the operation example 2-1-2, the IAB node can configure/indicate whether it is expected to detect the DCI format 2_5 to obtain the dynamic indication regarding the availability of the soft resource from each cell group. When one IAB node is configured/indicated to expect to detect the DCI format 2_5 to obtain the dynamic indication regarding the availability of the soft resource from only one cell group, the operation example 2-1-2 is applied.

On the other hand, when the IAB node is configured/indicated to expect to detect the DCI format 2_5 to obtain the dynamic indication regarding the availability of the soft resource from the plurality of cell groups, the operation example 2-2 is applied. For example, in both the MCG and SCG, the AvailabilityIndicator includes the AvalabilityCombinationsPerCell of the DU serving cell, and the DU serving cell expects the dynamic indication from both the MSC and SCG. Here, when the IAB node MT detects the DCI format 2_5 from both the parent nodes and it is indicated that the AI index field value is available, the IAB node DU can perform the Tx/Rx on the symbol.

When the IAB node is not configured/indicated to detect the DCI format 2_5 of the dynamic indication regarding the availability of the soft resource from, for example, any cell group of the MCG and the SCG, the AvailabilityIndicator does not include the AvalabilityCombinationsPerCell of the DU serving cell. In this case, the operation of the default IAB node is specified by one of the following:
Alt1: The IAB node DU can execute Tx/Rx on the resource. The IAB node DU assumes that both the parent nodes (MCG and SCG) do not use resources.
Alt2: When it is determined that the resource is available from the implicit indication, that is, the IAB node MT does not perform the transmission or reception within the symbol, or the IAB node MT performs the transmission or reception within the symbol and does not change the transmission or reception within the symbol due to the use of the symbol by the IAB node DU, the IAB node DU can perform the Tx/Rx on the resource.
Alt3: The IAB node DU cannot execute Tx/Rx on the resource.

### (3.2-2) Operation Example 2-2

An operation example 2-2, which is on the assumption that the configuration information (H/S/NA) of the DU resource is configured separately and is independently configured for the MCG and SCG, will be described.

### (Case 1)

In this case 1, when the Hard is configured on the one side and the Soft is configured on the other side, the other parent node the Soft resource is configured on transmits the configuration information that performs the dynamic indication of the IA/INA.

More specifically, the operation when the resource is configured semi-statically as the Hard in one cell group and the Soft in the other cell group will be described. For the cell group in which the resource is configured as the Soft, the IAB node determines whether the resource is available based on the function of the Release 16 below. Then, when the resource is explicitly or implicitly indicated as the available, the IAB node DU can use the resource.

When the IAB node is connected to two parent nodes in the downlink, uplink, or flexible symbol, and the symbol is configured as the Hard for the MCG (or SCG) and the Soft for the SCG (or MCG), the IAB node DU can perform either the transmission, the reception, or the transmission and reception with the symbol, respectively, only in the following cases.
· When the IAB node MT does not perform the transmission and reception with the symbol on the SCG (or MCG)
-When the IAB node MT performs the transmission and reception with the symbol on the SCG (or MCG), but the transmission and reception of the symbol are not changed because the IAB node DU uses the symbol.
* Note that the IAB node MT detects the DCI format 2_5 having the AI index field value indicating that the soft symbols are available from the SCG (MCG).

### (Case 2)

In the case that all resources are the Soft in the plurality of pieces of configuration information, the operation example 2-1-2 is applied. That is, when the resource is configured as the Soft for both cell groups, the operation example 2-1-2 can be used. In the operation example 2-2, the IAB node is expected to detect the DCI format 2_5 only from the cell group in which the soft resource is configured semi-statically.

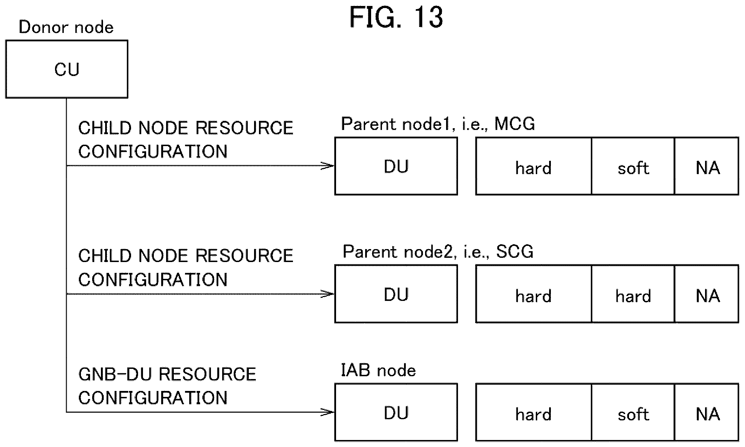

The above is an operation example for controlling the radio resource in the present embodiment. Note that one possible solution to support the operation example 1-1 is that the resource adjustment is managed by the CU 50. Since the CU 50 can indicate the H/S/NA configuration of the child node 100B to the parent node 100A, for the resource of the IAB node 100B, the CU 50 can indicate a resource as the "Soft" to one parent node 100A-1 and indicate a resource as the "Hard" to the other parent node 100A-2. When the resource of the child node is indicated as the "Hard", the parent node does not use the resource. In the example in Fig. 13, the CU 50 can indicate the resource of the child node as the "Hard" for the SCG, and in this case, the SCG does not use the "Hard" resource of the child node, so the IAB node 100B needs only the indication of the availability of the soft resource from the MCG.

Another possible solution to support the operation example 1-1 implements that the SCG never uses the soft resource of the child node, but the resource of the child node is indicated as the Soft. Even in this case, the IAB node only needs to indicate the availability of the soft resources from the MCG.

The above is the operation example of the present embodiment.

### (4) Action and effect

According to the embodiment described above, the following actions and effects can be obtained. Specifically, the IAB node 100B according to the present embodiment includes the connection unit (higher node connection unit 170 and lower node connection unit 180) that is used for the dual connectivity (MT dual connection) with the plurality of parent nodes and the connection (DU connection) to one or a plurality of lower nodes capable of sharing a radio resource, and the receiving unit (radio receiving unit 120) that receives the configuration information on the radio resource for at least the lower node from the parent node 100A or the central unit 50, whereby it is possible to share the configuration information on the availability of the resource that can be shared with the higher node (MT side), and it is possible to obtain information for accurate resource management in the MT dual connection and the DU connection.

More specifically, according to the present embodiment, since the radio resources for the parent node (MT side) and/or the lower node (DU side) are controlled based on the configuration information received from the central unit 50 or the parent node 100A, by obtaining the information on the configuration regarding the availability of resources that can be shared, so the appropriate resource control in the MT and the DU can be performed even in the situation where the MT connection and the DU connection that realize the dual connectivity with the plurality of parent nodes can be performed under the half-duplex restrictions and the like and resource management becomes complicated.

In addition, according to the present embodiment, based on the usage status of the radio resource for the parent node in addition to the received configuration information, since the radio resources for the parent node (MT side) and/or for the lower node (DU side) are controlled, even when there is no explicit indication from the higher node, for example, for the DU soft resource, the usage status of the radio resource, which can be shared, on the MT side is considered, so it is possible to appropriately control the resources. More specifically, the resource control can be performed to allow the DU not to use the resource when the target resource is being used on the MT side, allow the DU to use the resource when the target resource is not being used on the MT side, and the like.

In addition, according to the present embodiment, when the radio resource is not designated as being exclusively available (for example, Hard) for the lower node (for example, in the case of the DU soft resource), the configuration information (for example, dynamic indication such as Available or Not Available (NA)) on the availability of the radio resource for the lower node is received from the central unit 50 or one of the plurality of parent nodes 100A-1 and 100A-2, and the control of the radio resource for the parent node (MT side) and/or the lower node (DU side) is performed based on the received configuration information, so it is possible to accurately control the resource according to the indication of the availability of the target node from the higher node even when not designated as being exclusively available for the lower node (for example, in the case of the DU soft resource).

Further, according to the present embodiment,
· In the case where the plurality of pieces of configuration information is received, when the radio resource is designated as being exclusively available for the lower node (for example, Hard) in all the configuration information, the radio resource is controlled to be available for the lower node.
· In the case where the plurality of pieces of configuration information is received, when the radio resource is not available for the lower node (for example, NA) in at least one of the plurality of pieces of configuration information, the radio resource is controlled not to be available for the lower node, and/or
-control is performed on whether or not the radio resource is available for the lower node based on the configuration information received from the parent node in which the radio resource is not designated as being exclusively available (for example, Hard) for the lower node among the plurality of pieces of configuration information
   so it is possible to accurately manage the resources even when there is the plurality of pieces of configuration information under the environment of the dual connectivity where the parent node 100A are plural.

Further, according to the present embodiment, in the case where the plurality of pieces of configuration information is received, when the configuration information from at least one parent node 100A indicates that the radio resource is available for the lower node and/or the radio resource is not available for the higher node, since the radio resource is controlled to be available for the lower node, it is possible to accurately manage the resources according to the plurality of pieces of configuration information and the usage status of the resource on the MT side under the environment of the dual connectivity where the parent node 100A are plural.

### (5) Other embodiments

Although the embodiment has been described hereinabove, it is obvious to those skilled in the art that the present disclosure is not limited to the description of the embodiment, and can be variously modified and improved.

For example, in the above-described embodiment, the names of the parent node, the IAB node, and the child node are used, but the above names may be different as long as the configuration of the radio communication node where the radio backhaul between the radio communication nodes such as gNB and the radio access with the terminal are integrated is adopted. For example, these nodes may be simply called the first and second nodes or the like, or may be called a higher node, a lower node, a relay node, an intermediate node, or the like.

In addition, the radio communication node may be simply called a communication device or a communication node, or may be read as a radio base station.

In the embodiments described above, the terms downlink (DL) and uplink (UL) are used, but the downlink (DL) and uplink (UL) may be called in other terms. For example, the downlink (DL) and uplink (UL) may be replaced with or associated with terms such as a forward link, a reverse link, an access link, and backhaul. Alternatively, terms such as the first link, the second link, the first direction, the second direction, and the like may be simply used.

Moreover, the block configuration diagram used for explaining the embodiments (Figs. 3 and 4) illustrates blocks on a functional basis. Those functional blocks (structural components) can be realized by a desired combination of at least one of hardware and software. The realization method of each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that makes transmitting may be called a transmitting unit or a transmitter. For any of the above, as explained above, the realization method is not particularly limited.

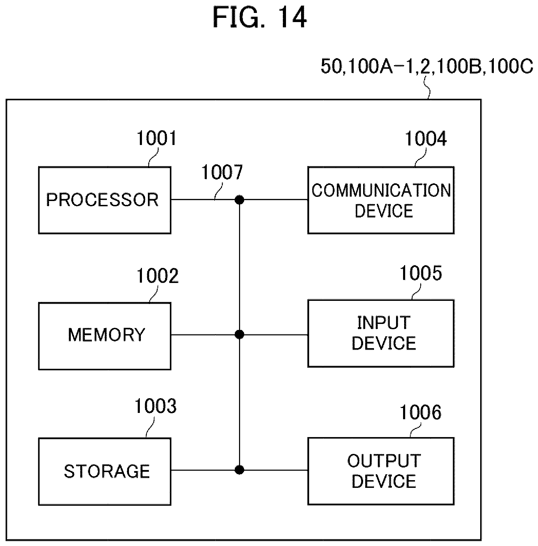

Further, the above-described CU 50, the radio communication nodes 100A to 100C, and the UE 200 (device) may function as a computer that performs processing of a radio communication method of the present disclosure. Fig. 14 is a diagram illustrating an example of a hardware configuration of the device. As illustrated in Fig. 14, the device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices illustrated in the figure, or can be constituted without including a part of the devices.

Each functional block (see Figs. 3 and 4) of the device can be realized by any of hardware elements of the computer device or a desired combination of the hardware elements.

In addition, the processor 1001 performs operation by loading a predetermined software (computer program) on hardware such as the processor 1001 and the memory 1002, and realizes each function of the device by controlling communication via the communication device 1004, and controlling at least one of reading and writing of data on the memory 1002 and the storage 1003.

The processor 1001, for example, operates an operating system to control the entire computer. The processor 1001 can be configured with a central processing unit (CPU) including an interface with a peripheral device, a control device, an operation device, a register, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least a part of the operation explained in the above embodiments is used. Furthermore, various processes explained above can be executed by one processor 1001 or can be executed simultaneously or sequentially by two or more processors 1001. The processor 1001 can be implemented by using one or more chips. Alternatively, the program can be transmitted from a network via a telecommunication line.

The memory 1002 is a computer readable recording medium and may be configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include at least one of an optical disk such as compact disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also called, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information therebetween. The bus 1007 can be constituted by a single bus or can be constituted by separate buses between the devices.

Further, the device may be configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

In addition, notification of information is not limited to that in the aspect/embodiment described in the present disclosure, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the aspects/embodiments described in the present disclosure can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the aspects/embodiments described in the present disclosure may be exchanged. For example, the various steps and the sequence of the steps of the methods explained in the present disclosure are exemplary and are not limited to the specific order mentioned above.

The specific operation that is performed by the base station in the present disclosure may be performed by its higher node (upper node) in some cases. In a network constituted by one or more network nodes having a base station, it is obvious that the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from a higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The information can be eliminated after outputting. The inputted information can be transmitted to another device.

The determination may be made by a value (0 or 1) represented by one bit or by truth-value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Regardless of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

Information, signals, or the like explained in the present disclosure may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced with terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be represented as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names allocated to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of at least one of a base station and a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station may be called a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or some other suitable term by the those skilled in the art.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), or a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration in which a communication between a base station and a mobile station is replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

A radio frame may be composed of one or a plurality of frames in a time domain. Each one or more frames in the time domain may be called a subframe. The subframe may also be composed of one or a plurality of slots in the time domain. The subframe may have a fixed time length (for example, 1 ms) that does not depend on numerology.

The numerology may be a communication parameter applied to at least one of transmission and reception of a certain signal or channel. The numerology may indicate at least one of, for example, a subcarrier spacing (SCS), a bandwidth, a symbol length, a cyclic prefix length, a transmission time interval (TTI), the number of symbols per TTI, a radio frame configuration, a specific filtering process performed by a transceiver in a frequency domain, a specific windowing process performed by the transceiver in the time domain, and the like.

The slot may be composed of one or a plurality of symbols (Orthogonal Frequency Division Multiplexing (OFDM) symbols, Single Carrier Frequency Division Multiple Access (SC-FDMA) symbols, or the like) in the time domain. The slot may be a time unit based on numerology.

The slot may include a plurality of minislots. Each minislot may be composed of one or a plurality of symbols in the time domain. Also, the minislot may be rcalled a subslot. The minislot may be composed of a smaller number of symbols than the slot. A PDSCH (or PUSCH) transmitted in a time unit larger than the minislot may be called PDSCH (or PUSCH) mapping type A. A PDSCH (or PUSCH) transmitted using the minislot may be called PDSCH (or PUSCH) mapping type B.

All of the radio frame, the subframe, the slot, the minislot, and the symbol represent time units for transmitting a signal. The radio frame, the subframe, the slot, the minislot, and the symbol may have different names corresponding thereto, respectively.

For example, one subframe may be called a transmission time interval (TTI), a plurality of consecutive subframes may be called a TTI, and one slot or one minislot may be called a TTI. That is, at least one of the subframe and the TTI may be a subframe (1 ms) in the existing LTE, may be a period shorter than 1 ms (for example, one to thirteen symbols), or may be a period longer than 1 ms. Note that a unit representing the TTI may be called a slot, a minislot, or the like rather than the subframe.

Here, the TTI refers to, for example, a minimum time unit of scheduling in radio communication. For example, in an LTE system, a base station performs scheduling that allocates radio resources (frequency bandwidths, transmission power, and the like, that can be used in each user terminal) to each user terminal at the TTI. Note that a definition of the TTI is not limited thereto.

The TTI may be a transmission time unit of a channel-encoded data packet (transport block), a code block, a codeword, or the like, or may be a processing unit such as scheduling, link adaptation, or the like. Note that when the TTI is given, a time section (for example, the number of symbols) in which the transport block, the code block, the codeword, or the like is actually mapped may be shorter than the TTI.

Note that in a case where one slot or one minislot is called the TTI, one or more TTIs (that is, one or more slots or one or more minislots) may be a minimum time unit for scheduling. Also, the number of slots (number of minislots) constituting the minimum time unit for scheduling may be controlled.

A TTI having a time length of 1 ms may be called a usual TTI (TTI in LTE Rel. 8-12), a normal TTI, a long TTI, a usual subframe, a normal subframe, a long subframe, a slot, or the like. A TTI shorter than the usual TTI may be called a shortened TTI, a short TTI, a partial TTI (a partial or fractional TTI), a shortened subframe, a short subframe, a minislot, a subslot, a slot, or the like.

Note that the long TTI (for example, a usual TTI, a subframe or the like) may be replaced with a TTI having a time length exceeding 1 ms, and the short TTI (for example, a shortened TTI or the like) may be replaced with a TTI having a TTI length shorter than the length of the long TTI and having a TTI length of 1 ms or more.

A resource block (RB) is a resource allocation unit in the time domain and the frequency domain, and may include one or a plurality of contiguous subcarriers in the frequency domain. The number of subcarriers included in the RB may be the same regardless of the numerology, and may be, for example, 12. The number of subcarriers included in the RB may be determined based on the numerology.

In addition, the time domain of the RB may include one or a plurality of symbols, and may have a length of one slot, one minislot, one subframe, or one TTI. One TTI, one subframe, or the like, may be formed by one or a plurality of resource blocks.

Note that one or a plurality of RBs may be called a physical resource block (Physical RB: PRB), a subcarrier group (Sub-Carrier Group: SCG), a resource element group (Resource Element Group: REG), a PRB pair, an RB pair, or the like.

In addition, the resource block may be formed by one or a plurality of resource elements (Resource Elements: RE). For example, one RE may be a radio resource domain of one subcarrier and one symbol.

A bandwidth part (Bandwidth Part: BWP) (which may be called a partial bandwidth or the like) may represent a subset of contiguous common resource blocks (RBs) for certain numerology in a certain carrier. Here, the common RB may be specified by a RB index with reference to a common reference point of the carrier. The PRB may be defined in a certain BWP and be numbered within the BWP.

The BWP may include a BWP for UL (UL BWP) and a BWP for DL (DL BWP). For the UE, one or a plurality of BWPs may be set within one carrier.

At least one of the set BWPs may be active, and the UE may not expect to transmit or receive a predetermined signal/channel outside the active BWP. Note that a "cell", a "carrier", and the like in the present disclosure may be replaced with the "BWP".

The structures of the radio frame, the subframe, the slot, the minislot, the symbol, and the like, described above are merely examples. For example, a configuration such as the number of subframes included in the radio frame, the number of slots per subframe or radio frame, the number of minislots included in the slot, the number of symbols and RBs included in the slot or the minislot, the number of subcarriers included in the RB, the number of symbols in the TTI, the symbol length, the cyclic prefix (CP) length, and the like can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, printed electrical connections, and as some non-limiting and non-exhaustive examples, by using electromagnetic energy having wavelengths in the radio frequency domain, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the devices described above may be replaced with a "unit", a "circuit" a, "device", or the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in this disclosure, these articles shall include plurality of nouns following these articles.

The term "determining" used in this disclosure may encompass a wide variety of operations. The term "determining" here may mean, for example, determining that judging, calculating, computing, processing, deriving, investigating, looking up, search, inquiry (for example, searching a table, a database, or other data structures), ascertaining has been done, or the like. The term "determining" here may also mean determining that receiving (for example, receiving information), transmitting (for example, transmitting information), input, output, accessing (for example, accessing data in a memory) has been done, or the like. The term "determining" here may further mean determining that resolving, selecting, choosing, establishing, comparing, or the like has been done. That is, the term "determining" here may mean determining some operation. The term "determining" here may be replaced with "assuming", "expecting", "considering", or the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10: Radio communication system
- 50: CU
- 100A: Parent node
- 100B: IAB node
- 100C: Child node
- 110: Radio transmitting unit
- 120: Radio receiving unit
- 130: NW IF unit
- 140: IAB node connection unit
- 150: Control unit
- 161: Radio transmitting unit
- 162: Radio receiving unit
- 170: Higher node connection unit
- 180: Lower node connection unit
- 190: Control unit
- 200: UE
- 1001: Processor
- 1002: Memory
- 1003: Storage
- 1004: Communication device
- 1005: Input device
- 1006: Output device
- 1007: Bus

## Claims

1. A radio communication node, comprising:
a connection unit that is used for dual connectivity with a plurality of parent nodes and a connection to one or a plurality of lower nodes, the parent nodes and the lower nodes capable of sharing a radio resource; and
a receiving unit that receives configuration information on the radio resource for at least the lower node from the parent node or a central unit.

2. The radio communication node according to claim 1, further comprising:
a control unit that controls the radio resource for the parent node and/or the lower node based on the configuration information.

3. The radio communication node according to claim 2, wherein
the control unit
further controls the radio resource for the parent node and/or the lower node based on a usage status of the radio resource for the parent node.

4. The radio communication node according to claim 1 or 2, wherein
the receiving unit
receives configuration information on availability of the radio resource for the lower node from one of the central unit or the plurality of parent nodes when the radio resource is not designated as being exclusively available for the lower node, and
the control unit
controls the radio resource for the parent node and/or the lower node based on the configuration information received by the receiving unit.

5. The radio communication node according to claim 2, wherein
the control unit
controls the radio resource to be available for the lower node when the radio resource is designated as being exclusively available for the lower node in all the configuration information in a case where the plurality of pieces of configuration information is received,
controls the radio resource not to be available for the lower node when the radio resource is not available for the lower node in at least one of the plurality of pieces of configuration information in the case where the plurality of pieces of configuration information is received, and/or
controls whether the radio resource is available for the lower node based on the configuration information received from the parent node in which the radio resource is not designated as being exclusively available for the lower node among the plurality of pieces of configuration information.

6. The radio communication node according to claim 2, wherein
the control unit
controls the radio resource to be available for the lower node when the configuration information from at least one of the parent nodes indicates that the radio resource is available for the lower node and/or when the radio resource is not available for the higher node in a case where the plurality of pieces of configuration information is received.
